# EUROPEAN PATENT APPLICATION

(11) **EP 4 730 614 A1**
(43) Date of publication of application: **22.04.2026**
(21) Application number: 24924997.0
(22) Date of filing: 21.10.2024
(51) Int. Cl.: H02K 1/20, H02K 1/14, H02K 3/14, H02K 3/52, H02K 9/19

(54) **ELECTRIC MOTOR**

(30) Priority: 14.02.2024 KR 20240021118
(71) Applicant: LG Magna e-Powertrain Co., Ltd., Seo-gu, Incheon 22744 (KR)
(72) Inventor: SON, Sang Jin, Incheon 22744 (KR); KANG, Yongsoo, Incheon 22744 (KR); LEE, Jaeung, Incheon 22744 (KR); CHO, Woonseong, Incheon 22744 (KR); PARK, Yongsoo, Incheon 22744 (KR)
(74) Representative: Vossius & Partner Patentanwälte Rechtsanwälte mbB
(86) International application number: PCT/KR2024/015965
(87) International publication number: WO 2025/173853

(57) **Abstract**

An electric motor of the present disclosure may include: a housing; a stator positioned inside the housing; and a rotor positioned inside the stator, wherein the stator may include: a core having a hollow cylindrical shape, the core including a slot formed by penetrating both ends of the core in an axial direction of the core; a coil wound around the slot and through which a current flows; and a sleeve extending along the slot and covering a lateral surface of the coil, the sleeve forming a path between the sleeve and the coil, wherein the core may include a hole formed from an outer circumferential surface of the core toward the slot, and communicating with the path of the sleeve, wherein the housing may include an oil inlet formed at the housing.

## Description

### TECHNICAL FIELD

The present disclosure relates to an electric motor. More particularly, the present disclosure relates to an electric motor with improved cooling performance.

### BACKGROUND ART

An electric motor is a device that converts electric energy into rotational kinetic energy. By electromagnetic interaction between the stator and rotor of the electric motor, the rotor rotates at a high speed. The torque generated by the electric motor may be provided to various products such as an electric vehicle and the like. Recently, with the rapid growth of the electric vehicle (EV) market, high-power, high-speed electric motor is actively researched.

However, it is difficult to improve performance of the electric motor due to heat generated by the electric motor. Particularly, it is difficult to effectively cool a stator coil on which a hot spot is formed.

### DETAILED DESCRIPTION OF INVENTION

### TECHNICAL PROBLEMS

It is an objective of the present disclosure to solve the above and other problems.

Another object of the present disclosure may be to provide an electric motor with improved cooling performance.

Another object of the present disclosure may be to provide a structure for directly cooling a stator coil with oil.

Another object of the present disclosure may be to provide a structure for directly cooling a coil from the center to both ends thereof with oil.

Another object of the present disclosure may be to provide a structure of a core of a stator that provides a path of oil.

Another object of the present disclosure may be to provide a holder for providing a path of oil that directly cools a coil.

Another object of the present disclosure may be to provide a holder for fixing the position of a coil while providing electrical isolation between the coil and a core of a stator.

Another object of the present disclosure may be to provide a structure for increasing cooling efficiency of a stator by forming a zigzag path of oil at the center of a core.

Another object of the present disclosure may be to provide a structure for fixing an end-turn portion of a coil.

Another object of the present disclosure may be to provide a structure for reducing the volume of an electric motor and the manufacturing cost of the electric motor.

### TECHNICAL SOLUTION

In accordance with an aspect of the present disclosure for achieving the above and other objectives, an electric motor may include: a housing; a stator positioned inside the housing; and a rotor positioned inside the stator, wherein the stator includes: a core having a hollow cylindrical shape, the core including a slot formed by penetrating both ends of the core in an axial direction of the core; a coil wound around the slot and through which a current flows; and a sleeve extending along the slot and covering a lateral surface of the coil, the sleeve forming a path between the sleeve and the coil, wherein the core includes a hole formed from an outer circumferential surface of the core toward the slot, and communicating with the path of the sleeve, wherein the housing may include an oil inlet formed at the housing.

### EFFECT OF INVENTION

An electric motor according to the present disclosure has the following effects.

According to at least one of the embodiments of the present disclosure, an electric motor with improved cooling performance may be provided.

According to at least one of the embodiments of the present disclosure, a structure for directly cooling a stator coil with oil may be provided.

According to at least one of the embodiments of the present disclosure, a structure for directly cooling a coil from the center to both ends thereof with oil may be provided.

According to at least one of the embodiments of the present disclosure, a structure of a core of a stator that provides a path of oil may be provided.

According to at least one of the embodiments of the present disclosure, a holder for providing a path of oil that directly cools a coil may be provided.

According to at least one of the embodiments of the present disclosure, a holder for fixing the position of a coil while providing electrical isolation between the coil and a core of a stator may be provided.

According to at least one of the embodiments of the present disclosure, a structure for increasing cooling efficiency of a stator by forming a zigzag path of oil at the center of a core may be provided.

According to at least one of the embodiments of the present disclosure, a structure for fixing an end-turn portion of a coil may be provided.

According to at least one of the embodiments of the present disclosure, a structure for reducing the volume of an electric motor and the manufacturing cost of the electric motor may be provided.

Further scope of applicability of the present disclosure will become apparent from the following detailed description. However, it should be understood that the detailed description and specific embodiments such as preferred embodiments of the present disclosure are given by way of example only, since various changes and modifications within the idea and scope of the present disclosure may be clearly understood by those skilled in the art.

### BRIEF DESCRIPTION OF THE DRAWING

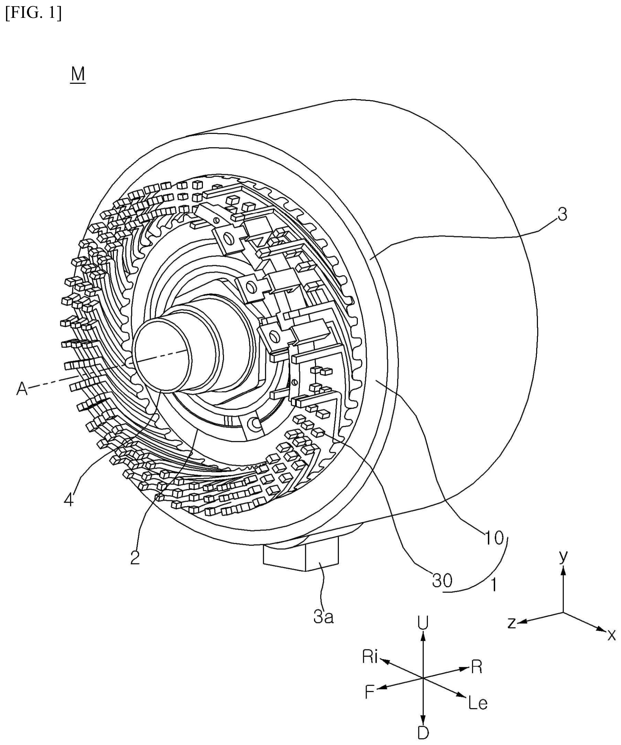

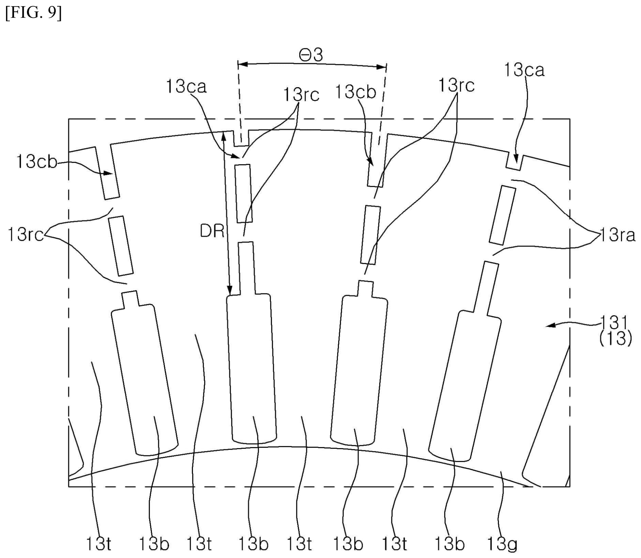

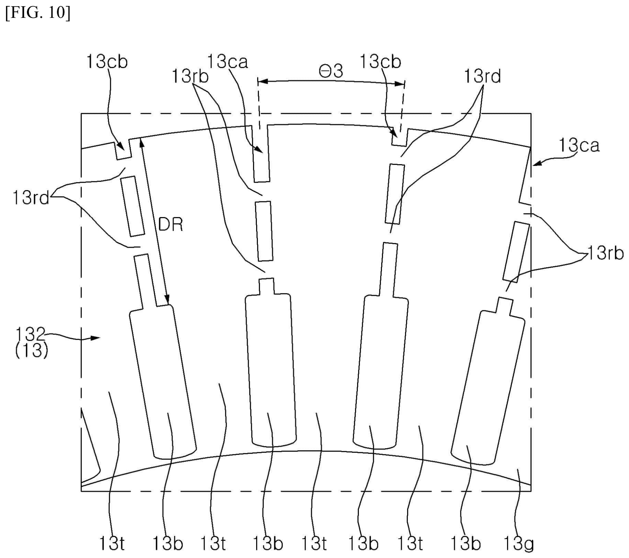

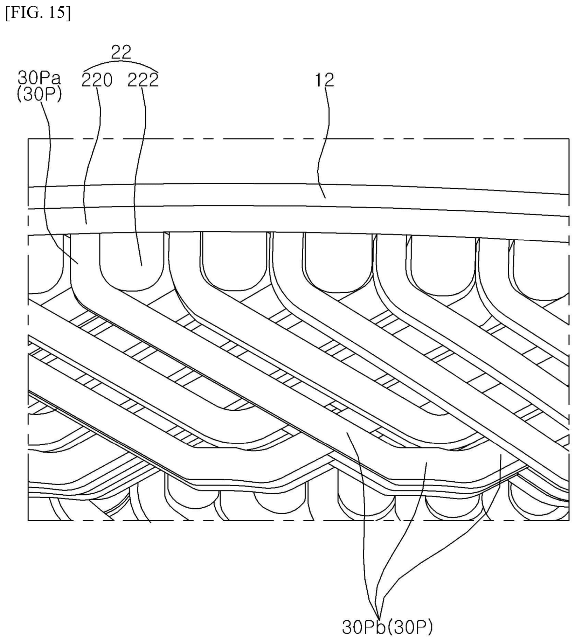

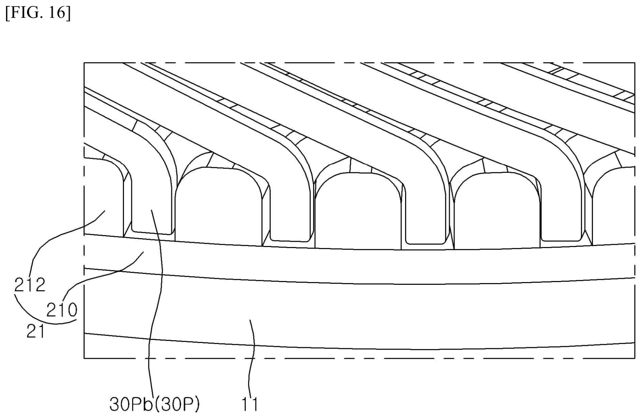

FIGS. 1 to 26 are diagrams illustrating examples of an electric motor according to embodiments of the present disclosure.

### MODE FOR CARRYING OUT THE INVENTION

Hereinafter, the present disclosure will be described in detail with reference to the accompanying drawings, in which the same reference numerals are used throughout the drawings to designate the same or similar components, and a redundant description thereof will be omitted.

The suffixes, such as "module" and "unit," for elements used in the following description are given simply in view of the ease of the description, and do not have a distinguishing meaning or role.

In addition, it will be noted that a detailed description of known arts will be omitted if it is determined that the detailed description of the known arts can obscure the embodiments of the present disclosure. Further, the accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that, although the terms first, second, etc., may be used herein to describe various elements, these elements should not be limited by these terms. These terms are only used to distinguish one element from another.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

A singular representation may include a plural representation unless context clearly indicates otherwise.

It should be understood that the terms "comprise," "include," "have," etc. when used in this specification, specify the presence of stated features, integers, steps, operations, elements, components, or combinations thereof but do not preclude the presence or addition of one or more other features, integers, steps, operations, elements, components, or combinations thereof.

References to directions, such as up (U), down (D), left (Le), right (Ri), front (F), and rear (R), shown in the drawings are provided merely for convenience of explanation and are not intended for limiting the scope of the present disclosure.

Referring to FIG. 1, an electric motor M may include a stator 1 and a rotor 2.

The stator 1 may have a hollow cylindrical shape. A coil 30 may be wound around the stator 1, and a current may flow through the coil 30. The coil 30 may be a component of the stator 1. A housing 3 may cover a lateral surface of the stator 1.

The rotor 2 may be located inside the stator 1 and may have a cylindrical shape. The rotor 2 may have magnet(s), and when a current flows through the coil 30 of the stator 1, the rotor 2 may rotate relative to the stator 1. The magnet(s) may be a component of the rotor 2. A shaft 4 may be fixed to the center of the rotor 2 and may rotate together with the rotor 2. A rotation axis A of the shaft 4 may be parallel to a front-rear direction. For example, the shaft 4 may be connected to a drive shaft of an electric vehicle.

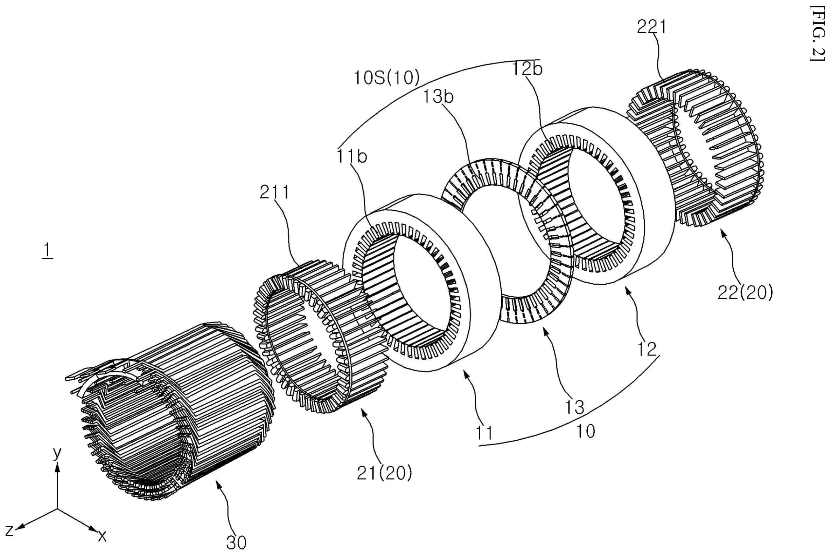

Referring to FIG. 2, the stator 1 may include a core 10, a holder 20, and the coil 30.

The core 10 may be generally in the shape of a hollow cylinder. The core 10 may include a first side core 11, a second side core 12, and a middle core 13. The first side core 11 may form a first end of the core 10. The second side core 12 may form a second end of the core 10. The middle core 13 may be disposed between the first side core 11 and the second side core 12. The middle core 13 may form a central portion of the core 10. The first side core 11 may be referred to as a front core 11, the second side core 12 may be referred to as a rear core 12, and the middle core 13 may be referred to as a central core 13.

The holder 20 may be inserted into a slot 10S of the core 10. A portion 211 of a first holder 21 may be inserted into a slot 11b of the first side core 11. A portion 221 of a second holder 22 may be inserted into a slot 12b of the second side core 12. A slot 13b of the middle core 13 may provide a passage which connects an internal space of the portion 211 of the first holder 21 and an internal space of the portion 221 of the second holder 22. Alternatively, the portion 211 of the first holder 21 and/or the portion 221 of the second holder 22 may also be inserted into the slot 13b of the middle core 13. The slot 11b of the first side core 11 may form a first section 11b of the slot 10S. The slot 12b of the second side core 12 may form a second section 12b of the slot 10S. The slot 13b of the middle core 13 may form a third section 13b of the slot 10S, and the third section 13b may connect the first and second sections 11b and 12b.

The coil 30 may be inserted into the holder 20 which is inserted into the slot 10S of the core 10. The coil 30 may pass through the internal space of the portion 211 of the first holder 21, the slot 13b of the middle core 31, and the internal space of the portion 221 of the second holder 22. The coil 30 may be wound around the slot 10S and the holder 20. The coil 30 may be a hairpin coil 30. The coil 30 may be referred to as a conductor 30 or a wire 30.

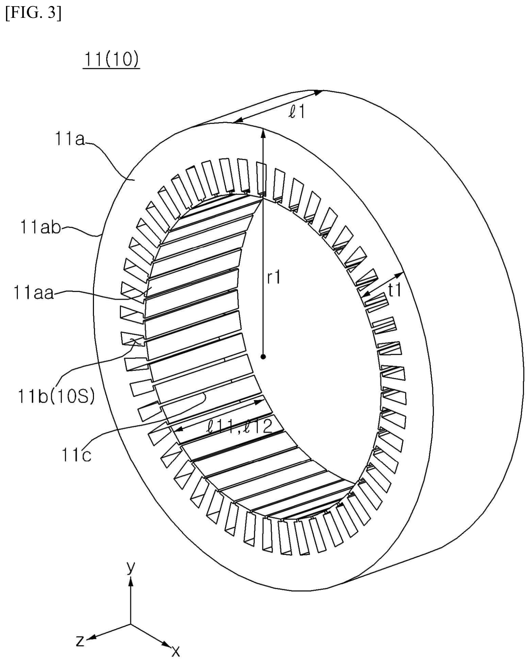

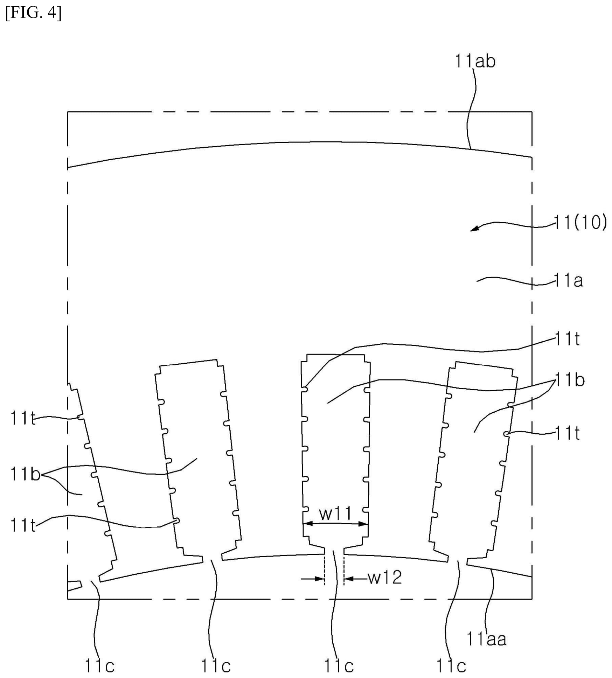

Referring to FIGS. 3 and 4, the first side core 11 may include a body 11a, a slot 11b, and a slit 11c.

The body 11a may have a hollow cylindrical shape. A length 11 of the body 11a may be smaller than a radius r1 of the body 11a. A thickness t1 of the body 11a may be smaller than the length l1 of the body 11a.

The slot 11b may be formed by penetrating both ends of the body 11a in an axial direction of the body 11a. That is, a length l11 of the slot 11b may be equal to the length l1 of the body 11a. The slot 11b may be adjacent to an inner circumferential surface 11aa of the body 11a. The slot 11b may extend in a direction intersecting the inner circumferential surface 11aa and an outer circumferential surface 11ab of the body 11a. The slot 11b may extend in a radial direction of the first side core 11. A plurality of slots 11b may be spaced apart from each other in a circumferential direction of the body 11a.

The slit 11c may be formed in the inner circumferential surface 11aa of the body 11a and may face the slot 11b. The slot 11b may be opened toward the slit 11c. The slit 11c may be elongated along the slot 11b. A length l12 of the slit 11c may be equal to the length 111 of the slot 11b. A width w12 of the slit 11c may be smaller than a width w11 of the slot 11b. A plurality of slits 11c may be spaced apart from each other in the circumferential direction of the body 11a and may correspond to the plurality of slots 11b. Each of the plurality of slits 11c may be aligned with each of the plurality of slots 11b. The slit 11c and the slot 11b may be aligned with each other in the radial direction of the first side core 11.

The first side core 11 may include plates stacked on top of each other. The first side core 11 is a set of thin plates and may be referred to as a first lamination (laminated) core 11. The plates of the first side core 11 may be bonded to each other. The plate of the first side core 11 may be referred to as a sheet and may include a metal material such as steel. The plates forming the first side core 11 may have the same shape, and may form the body 11a, the slot 11b, and the slit 11c described above.

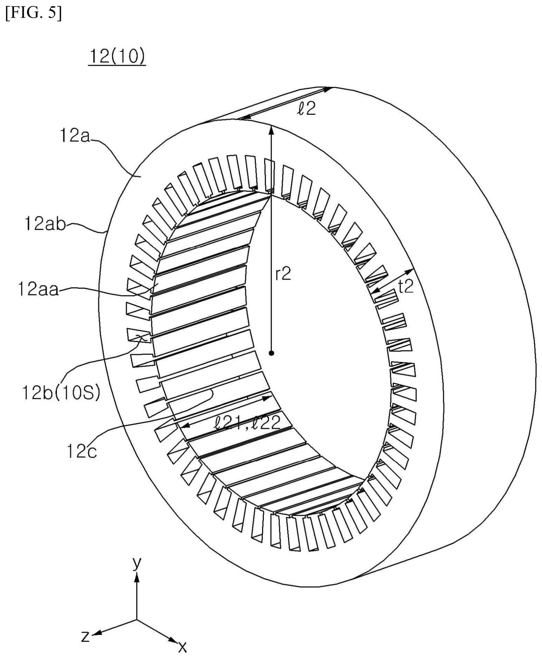

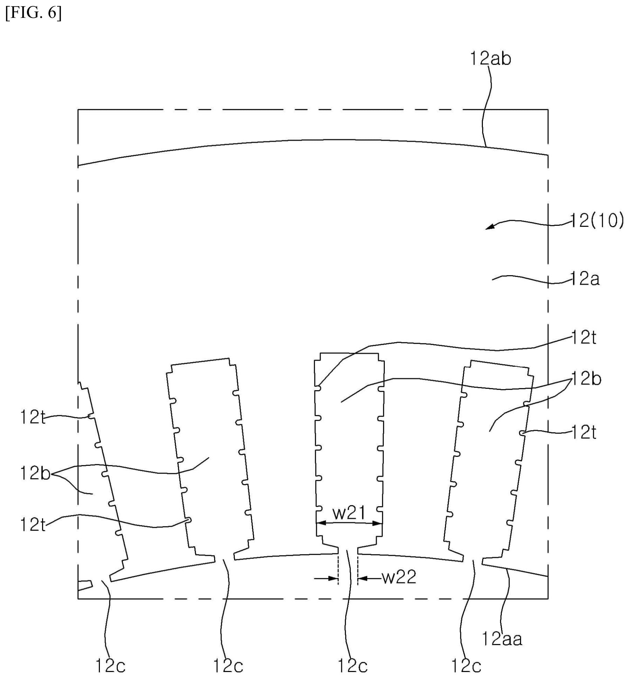

Referring to FIGS. 5 and 6, a second side core 12 may include a body 12a, a slot 12b, and a slit 12c.

The body 12a may have a hollow cylindrical shape. A length l2 of the body 12a may be smaller than a radius r2 of the body 12a. A thickness t2 of the body 12a may be smaller than the length l2 of the body 12a.

The slot 12b may be formed by penetrating both ends of the body 12a in an axial direction of the body 12a. That is, a length l21 of the slot 12b may be equal to the length l2 of the body 12a. The slot 12b may be adjacent to an inner circumferential surface 12aa of the body 12a. The slot 12b may extend in a direction intersecting the inner circumferential surface 12aa and an outer circumferential surface 12ab of the body 12a. The slot 12b may extend in a radial direction of the second side core 12. A plurality of slots 12b may be spaced apart from each other in a circumferential direction of the body 12a.

The slit 12c may be formed in the inner circumferential surface 12aa of the body 12a and may face the slot 12b. The slot 12b may be opened toward the slit 12c. The slit 12c may be elongated along the slot 12b. A length l22 of the slit 12c may be equal to the length l21 of the slot 12b. A width w22 of the slit 12c may be smaller than a width w21 of the slot 12b. A plurality of slits 12c may be spaced apart from each other in the circumferential direction of the body 12a and may correspond to the plurality of slots 12b. Each of the plurality of slits 12c may be aligned with each of the plurality of slots 12b. The slit 12c and the slot 12b may be aligned with each other in the radial direction of the second side core 12.

The second side core 12 may include plates stacked on top of each other. The second side core 12 is a set of thin plates and may be referred to as a second lamination (laminated) core 12. The plates of the second side core 12 may be bonded to each other. The plate of the second side core 12 may be referred to as a sheet and may include a metal material such as steel. The plates forming the second side core 12 may have the same shape, and may form the body 12a, the slot 12b, and the slit 12c described above.

Referring back to FIGS. 3 to 6, the first side core 11 and the second side core 12 may have the same structure, shape, and material. In other words, the first and second side cores 11 and 12 may be side cores of one type. The first and second side cores 11 and 12 may be collectively referred to as the side core.

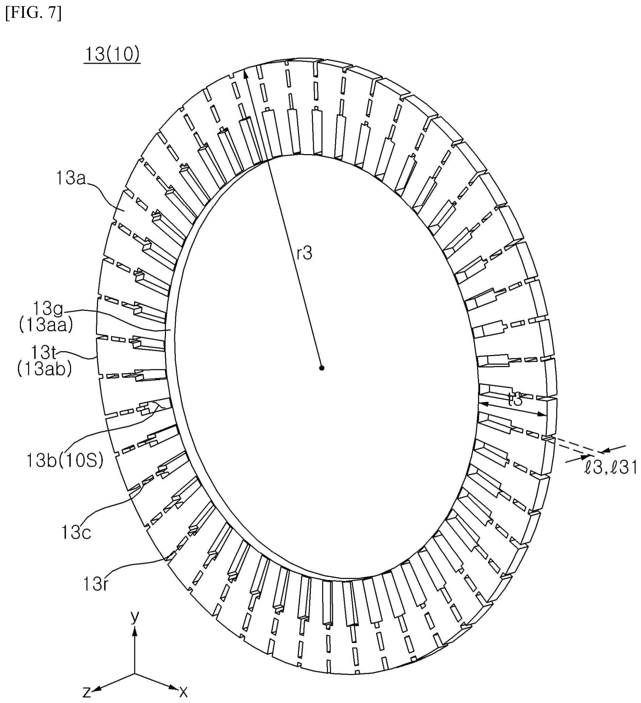

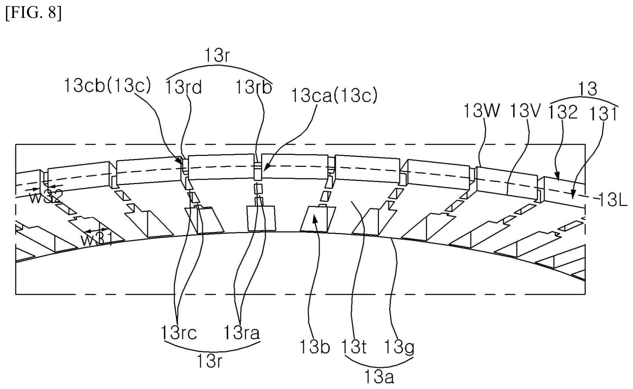

Referring to FIGS. 7 and 8, the middle core 13 may include a body 13a, a slot 13b, and a hole 13c.

The body 13a may have a ring shape. A length l3 of the body 13a may be smaller than a radius r3 of the body 13a. A thickness t3 of the body 13a may be greater than the length l3 of the body 13a and may be smaller than the radius r3 of the body 13a.

The slot 13b may be formed by penetrating both ends of the body 13a in an axial direction of the body 13a. That is, a length l31 of the slot 13b may be equal to the length l3 of the body 13a. The slot 13b may be adjacent to an inner circumferential surface 13aa of the body 13a. The slot 13b may extend in a direction intersecting the inner circumferential surface 13aa and an outer circumferential surface 13ab of the body 13a. The slot 13b may extend in a radial direction of the middle core 13. A plurality of slots 13b may be spaced apart from each other in a circumferential direction of the body 13a.

The hole 13c may be formed in the outer circumferential surface 13ab of the body 13a and may face the slot 13b. The hole 13c may extend from the outer circumferential surface 13ab of the body 13a in a radial direction of the middle core 13. The slot 13b may be opened toward the hole 13c. The hole 13c may be formed along the slot 13b. A width w32 of the hole 13c may be smaller than a width w31 of the slot 13b. A plurality of holes 13c may be spaced apart from each other in the circumferential direction of the body 13a and may correspond to the plurality of slots 13b. Each of the plurality of holes 13c may be aligned with each of the plurality of slots 13b.

A gum 13g may form the inner circumferential surface 13aa of the body 13a and may form a closed loop. Teeth 13t may protrude from the gum 13g to form the outer circumferential surface 13ab of the body 13a and may be arranged along the gum 13g. The slot 13b and the hole 13c may be formed between the teeth 13t. That is, the teeth 13t and the plurality of slots 13b may be arranged alternately. A rib 13r may be positioned in the hole 13c and may connect the teeth 13t that are next to each other. The rib 13r positioned between a first tooth 13t and a second tooth 13t may protrude from the first tooth 13t toward the second tooth 13t. A first end of the rib 13r may be fixed to the first tooth 13t, and a second end of the rib 13r may be fixed to the second tooth 13t. A plurality of ribs 13r may be positioned in the plurality of holes 13d. The body 13a may include the gum 13g, the teeth 13t, and the rib 13r, thereby improving rigidity of the body 13a.

The middle core 13 may include plates stacked on top of each other. The middle core 13 is a set of thin plates and may be referred to as a lamination (laminated) core 13. The plates of the middle core 13 may be bonded to each other. The plate of the middle core 13 may be referred to as a sheet and may include a metal material such as steel. The plates forming the middle core 13 may have the same shape, and may form the body 13a, the slot 13b, and the hole 13c described above.

Referring to FIGS. 8 to 10, the middle core 13 may be divided into a first middle core 131 and a second middle core 132 in an axial direction of the middle core 13. The first middle core 131 may form a first end 13V of the middle core 13, and the second middle core 132 may form a second end 13W of the middle core 13. The first end 13V of the middle core 13 may be referred to as a first side 13V of the middle core 13 and may face the first side core 11 (see FIG. 2). The second end 13W of the middle core 13 may be referred to as a second side 13W of the middle core 13 and may face the second side core 12 (see FIG. 2). A boundary line 13L between the first middle core 131 and the second middle core 132 lies in the middle of the first and second sides 13B and 13W and may be formed in a circumferential direction of the middle core 13. For example, both of a distance between the boundary line 13L and the first side 13V and a distance between the boundary line 13L and the second side 13W may be 2.5 mm. Each of the first and second middle cores 131 and 132 may be a set of thin plates.

The first middle core 131 may be referred to as first plates 131 stacked on top of each other. The ribs 13r of the first middle core 131 may be adjacent to the first side 13V and may be spaced apart from each other in a depth direction DR of the hole 13c. The ribs 13r may be positioned in each of the holes 13c of the first middle core 131. For example, the number of the ribs 13r positioned in any one hole 13c of the first middle core 131 may be two.

The second middle core 132 may be referred to as second plates 132 stacked on top of each other. The ribs 13r of the second middle core 132 may be adjacent to the second side 13W and may be spaced apart from each other in the depth direction DR of the hole 13c. The ribs 13r may be positioned in each of the holes 13c of the second middle core 132. For example, the number of the ribs 13r positioned in any one hole 13c of the second middle core 132 may be two.

The ribs 13r of the first middle core 131 and the ribs 13r of the second middle core 132, which are positioned in any one hole 13c of the middle core 13, may be staggered with each other in the depth direction DR of the hole 13c.

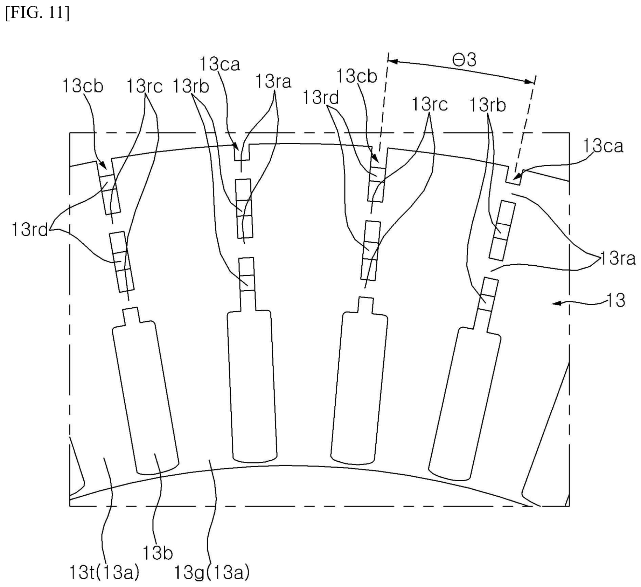

Referring to FIG. 11 together with FIG. 8, the holes 13c of the middle core 13 may include first holes 13ca and second holes 13cb. In the circumferential direction of the middle core 13, the first holes 13ca may be spaced apart from each other, and the second holes 13cb may be arranged alternately with the first holes 13ca.

The ribs 13r of the first middle core 131 may be adjacent to the first side 13V and may include first ribs 13ra and third ribs 13rc. The first ribs 13ra may be positioned in each of the first holes 13ca and may be spaced apart from each other in a depth direction DR of the first hole 13ca. The third ribs 13rc may be positioned in each of the second holes 13cb and may be spaced apart from each other in a depth direction DR of the second hole 13cb. The first rib 13ra and the third rib 13rc may be located at different heights (levels) in the depth direction DR of the first hole 13ca. For example, the first rib 13ra may be located closer to the outer circumferential surface of the first middle core 131 than the third rib 13rc.

The ribs 13r of the second middle core 132 may be adjacent to the second side 13W and may include second ribs 13rb and fourth ribs 13rd. The second ribs 13rb may be positioned in each of the first holes 13ca and may be spaced apart from each other in the depth direction DR of the first hole 13ca. The fourth ribs 13rd may be positioned in each of the second holes 13cb and may be spaced apart from each other in the depth direction DR of the second hole 13cb. The second rib 13rb and the fourth rib 13rd may be located at different heights (levels) in the depth direction DR of the second hole 13cb. For example, the fourth rib 13rd may be located closer to the outer circumferential surface of the second middle core 132 than the second rib 13rb.

Accordingly, the first ribs 13ra and the second ribs 13rb may be staggered with each other in the first holes 13ca. In addition, the third ribs 13rc and the fourth ribs 13rd may be staggered with each other in the second holes 13cb. The arrangement of the ribs 13ra, 13rb, 13rc, and 13rd may be referred to as a zigzag arrangement.

In the depth direction DR of the hole 13c of the middle core 13, the height (level) of the second ribs 13rb of the second middle core 132 may be equal to the height (level) of the third ribs 13ra of the first middle core 131. In the depth direction DR of the hole 13c of the middle core 13, the height (level) of the fourth ribs 13rd of the second middle core 132 may be equal to the height (level) of the first ribs 13ra of the first middle core 131.

In this case, by rotating the second middle core 132 by an angle theta 3 between the first hole 13ca and the second hole 13cb with respect to the first middle core 131 based on the axial direction of the middle core 13, the second and fourth ribs 13rb and 13rd of the second middle core 132 may be aligned with the first and third ribs 13ra and 13rc of the first middle core 131. In this manner, the second middle core 132 may be aligned with the first middle core 131, unlike FIGS. 8 and 11.

In other words, for a zigzag arrangement of the aforementioned ribs 13ra, 13rb, 13rc, and 13rd in the first and second middle cores 131 and 132 having the same shape, the second middle core 132 aligned with the first middle core 131 may be rotated with respect to the first middle core 131 by the angle theta 3 between the first hole 13ca and the second hole 13cb. In this manner, the second middle core 132 may be staggered with the first middle core 131 as illustrated in FIGS. 8 and 11.

For example, the number of holes 13c of the middle core 13 may be 48, and the angle theta 3 between the holes 13c may be 7.5 degrees (360 degrees/48). In this case, the ribs 13ra, 13rb, 13rc, and 13rd may be arranged in a zigzag arrangement by rotating the second middle core 132 relative to the first middle core 131 by 7.5 degrees or 172. 5 degrees (=180 degrees - 7.5 degrees) in the axial direction of the middle core 13.

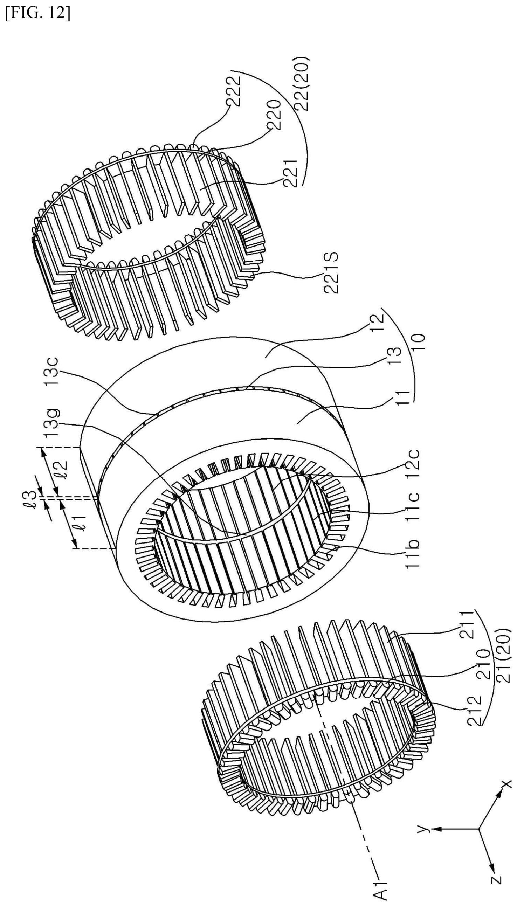

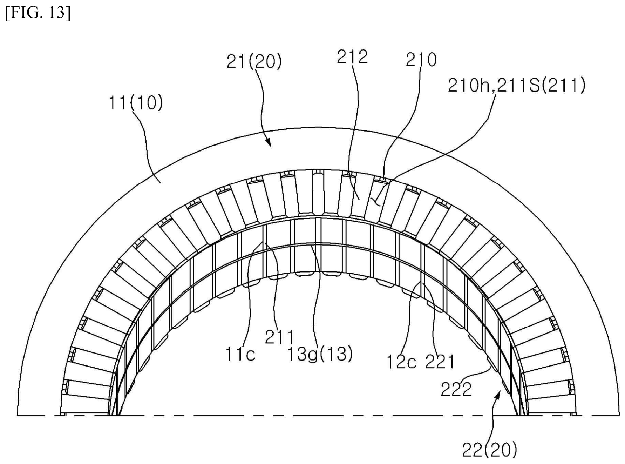

Referring to FIGS. 12 and 13, the middle core 13 of the core 10 may be sandwiched between the first and second side cores 11 and 12, and the middle core 13 may share a central axis A1 with the first and second side cores 11 and 12. A diameter of the middle core 13 may be equal to diameters of the first and side cores 11 and 12. The length l3 of the middle core 13 may be smaller than each of the lengths l1 and l2 of the first and second side cores 11 and 12 in the direction of the axis A1 of the core 10. In this case, the middle core 13 includes the gum 13g forming a closed loop, but the middle core 13 has a relatively small length l3, thereby minimizing performance deterioration of the electric motor M.

The plurality of slots 11b of the first side core 11, the plurality of slots 12b (see FIG. 5) of the second side core 12, and the plurality of slots 13b (see FIG. 8) of the middle core 13 may be aligned with each other in a direction parallel to the direction of the axis A1 of the core 10. The slots 11b, 12b, and 13b may have the same or corresponding shapes.

The first and second side cores 11 and 12 may block the holes 13c of the middle core 13 in the direction parallel to the direction of the axis A1 of the core 10.

The first holder 21 may include a ring 210, a sleeve 211, and a protruding portion 212.

The ring 210 may extend in the circumferential direction of the core 10. The ring 210 may be located on one end of the core 10, i.e., on a distal end of the first side core 11. The ring 210 may extend along the slots 11b of the first side core 11 and may be disposed corresponding to the slots 11b. Through-holes 210h may be formed in the ring 210 and may be aligned with the slots 11b.

The sleeve 211 may protrude from the ring 210 toward the slot 11b and may be inserted into the slot 11b. The sleeve 211 may be elongated along the slot 11b and may have an internal space 211S. A first end (inlet) of the internal space 211S may face the through-hole 210h of the ring 210, and a second end (outlet) of the internal space 211S may face the slot 13b (see FIG. 8) of the middle core 13. The sleeve 211 may have a length equal to or corresponding to the length of the slot 11b. The sleeve 211 may have a cross-section corresponding to the shape of the slot 11b. For example, the sleeve 211 may have a rectangular cross-section. A plurality of sleeves 211 may be arranged along the ring 210 and may be spaced apart from each other. Each of the plurality of sleeves 211 may be inserted into each of the plurality of slots 11b.

The protruding portion 212 may protrude from the ring 210 in a direction opposite the sleeve 211. A protruding height of the protruding portion 212 that protrudes from the ring 210 may be smaller than the length of the sleeve 211. A plurality of protruding portions 212 may be arranged along the ring 210 and may be spaced apart from each other. The plurality of protruding portions 212 may be staggered with the plurality of sleeves 211. That is, the protruding portions 212 may be arranged alternately with the through-holes 210h in the circumferential direction of the ring 210.

The first holder 21 may include a non-conductive material. For example, the first holder 21 may include a plastic or resin material. For example, the first holder 21 may be coupled to the first side core 11 by insert injection molding.

The second holder 22 may include a ring 220, a sleeve 221, and a protruding portion 222.

The ring 220 may extend in the circumferential direction of the core 10. The ring 220 may be located on another end of the core 10, i.e., on a distal end of the second side core 12. The ring 220 may extend along the slots 12b (see FIG. 5) of the second side core 12, and may be disposed corresponding to the slots 12b. Through-holes 220h may be formed in the ring 220 and may be aligned with the slots 12b.

The sleeve 221 may protrude from the ring 220 toward the slot 12b (see FIG. 5) and may be inserted into the slot 12b. The sleeve 221 may be elongated along the slot 12b and may have an internal space 221S. A first end (inlet) of the internal space 221S may face the through-hole 220h of the ring 220, and a second end (outlet) of the internal space 221S may face the slot 13b (see FIG. 8) of the middle core 13. The sleeve 221 may have a length equal to or corresponding to the length of the slot 12b. The sleeve 221 may have a cross-section corresponding to the shape of the slot 12b. For example, the sleeve 221 may have a rectangular cross-section. A plurality of sleeves 221 may be arranged along the ring 220 and may be spaced apart from each other. Each of the plurality of sleeves 221 may be inserted into each of the plurality of slots 12b.

The protruding portion 222 may protrude from the ring 220 in a direction opposite the sleeve 221. A protruding height of the protruding portion 222 that protrudes from the ring 220 may be smaller than the length of the sleeve 221. A plurality of protruding portions 222 may be arranged along the ring 220 and may be spaced apart from each other. The plurality of protruding portions 222 may be staggered with the plurality of sleeves 221. That is, the protruding portions 222 may be arranged alternately with the through-holes 220h in the circumferential direction of the ring 220.

The second holder 22 may include a non-conductive material. For example, the second holder 22 may include a plastic or resin material. For example, the second holder 22 may be coupled to the second side core 12 by insert injection molding.

For example, the first holder 21 and the second holder 22 may have the same structure, shape, and material. In other words, the first and second holders 21 and 22 may be holders of one type. The first and second holders 21 and 22 may be collectively referred to as the holder 20.

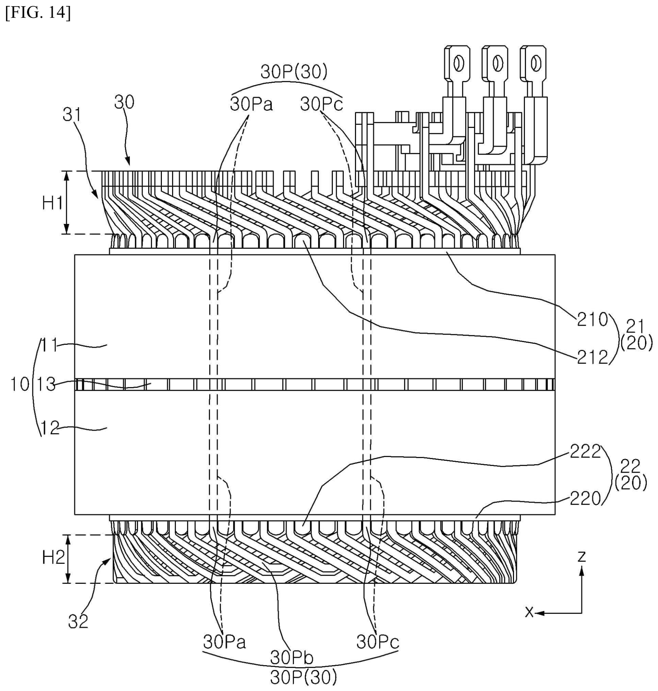

Referring to FIGS. 14 to 16, the coil 30 may be inserted into the holder 20. The coil 30 may be wound around the holder 20. The holder 20 made of a non-conductive material may provide electrical insulation between the coil 30 and the core 10. That is, insulation paper and/or varnish for electrical insulation between the coil 30 and the core 10 may be omitted, such that processing of the lamination (laminated) core 10 may be minimized, thereby minimizing performance deterioration of the core 10. The coil 30 may include a plurality of pins 30P.

For example, the pin 30 may have a hairpin shape. The pin 30P may include a first portion 30Pa, a second portion 30Pb, and a third portion 30Pc. The first portion 30Pa may be inserted into the sleeve 211 (see FIG. 12) of the first holder 21 and the sleeve 221 of the second holder 22 and may be elongated along the sleeves 211 and 221. The second portion 30Pb may be bent from the first portion 30Pa and may have a V shape. The third portion 30Pc may be bent from the second portion 30Pb and may be parallel to the first portion 30Pa. The third portion 30Pc may be inserted into the sleeves 211 and 221 which are spaced apart from the sleeves 211 and 221 in which the first portion 30Pa is inserted. The pin 30P may be referred to as a hairpin 30P, a U-shaped pin 30P, a coil 30P, a conductor 30P, or a wire 30P.

The protruding portions 222 of the second holder 22 may have a corrugated shape on the ring 220. Some of the protruding portions 222 may be disposed between the first portion 30Pa and the third portion 30Pc of the pin 30P. The second portion 30Pb of the pin 30P may be bent from the first and third portions 30Pa and 30Pc, and may be positioned on the protruding portion 222. In this case, the second portion 30Pb of the pin 30P is held by the protruding portions 222 of the second holder 222, such that movement of the pin 30P in a direction from the second holder 22 to the first holder 21 may be restricted. The second portion 30Pb of the pin 30P may protrude by a predetermined height H2 from the second holder 22. A portion of the pin 30P that protrudes from the second holder 22 may be referred to as a second end-turn portion 32.

The protruding portions 212 of the first holder 21 may have a corrugated shape on the ring 210. Some of the protruding portions 212 may be disposed between the first portion 30Pa and the third portion 30Pc of the pin 30P. The first portion 30Pa and the third portion 30Pc of the pin 30P may be bent or twisted outside the first holder 21, and may be positioned on the protruding portion 212. In this case, the first and third portions 30Pa and 30Pc of the pin 30P are held by the protruding portions 212 of the first holder 21, such that movement of the pin 30P in a direction from the first holder 21 to the second holder 22 may be restricted. The first and third bent portions 30Pa and 30Pc of the pin 30P may protrude by a predetermined height H1 from the first holder 21. A portion of the pin 30P that protrudes from the first holder 21 may be referred to as a first end-turn portion 31.

Accordingly, the coil 30 wound around the holder 20 may be coupled to the holder 20. The pins 30P of the coil 30 may be sequentially arranged in the circumferential direction of the holder 30.

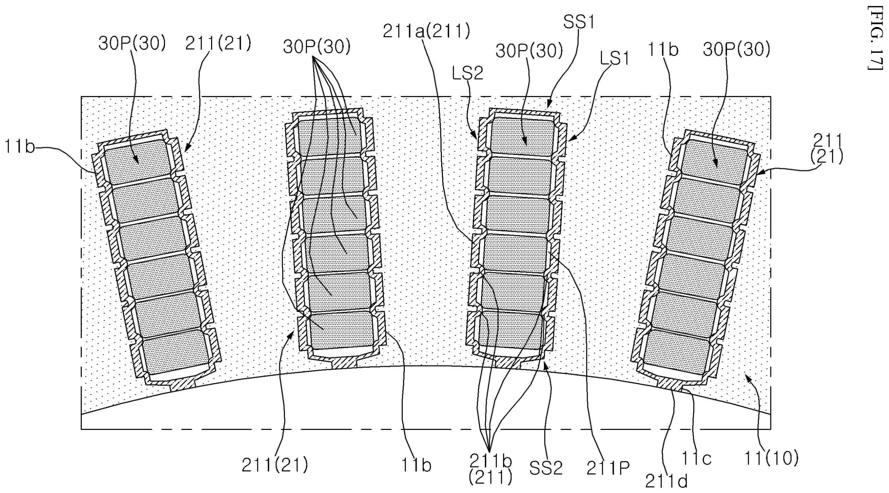

Referring to FIG. 17, the sleeve 211 of the first holder 21 may be positioned in the slot 11b of the first side core 11, and the plurality of pins 30P of the coil 30 may be positioned in the internal space 211S of the sleeve 211. The sleeve 211 may include a body 211a and protrusions 211b.

The body 211a may cover the pins 30P, and a cross-section of the body 211a may correspond to the shape of the slot 11b. The body 211a may have a rectangular cross-section. The body 211a may include two long sides LS1 and LS2 and two short sides SS1 and SS2. The pins 30P may be arranged along the long sides LS1 and LS2. For example, the pins 30P may form six layers. A direction in which the layers are stacked may be parallel to the radial direction of the core 10.

The protrusions 211b may protrude from the body 211a toward the pins 30P. The respective pins 30P may have a rectangular cross-section. The protrusions 211b may be adjacent to four corners of the respective pins 30P. The protrusions 211b may contact the respective pins 30P. The protrusion 211b may have a rounded distal end. Accordingly, the pins 30P may be coupled to the sleeve 211. That is, the position of the pins 30P inside the sleeve 211 may be fixed even without varnish. In addition, a distance between the pins 30P inside the sleeve 211 and an inner surface of the slot 13b of the middle core 13 may be maintained, such that electrical isolation may be maintained between the coil 30 and the core 10.

A path 211P may be formed between the body 211a and the pins 30P. The path 211P may be formed between the protrusions 211b. The path 211P may surround the pins 30P. The path 211P may be the path 211P of oil. That is, cooling oil may contact the pins 30P to directly cool the pins 30P.

The description of the sleeve 211 of the first holder 21 described above and to be described below nay also be applied to the sleeve 221 (see FIG. 12) of the second holder 22.

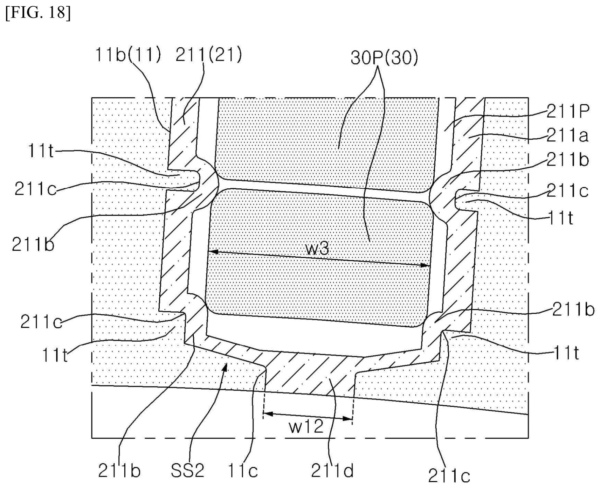

Referring to FIG. 18, the sleeve 211 of the first holder 21 may include an insertion groove 211c. The insertion groove 211c may be formed in an outer surface of the body 211a of the sleeve 211. The insertion groove 211c may be positioned opposite the protrusion 211b of the sleeve 211. For example, the protrusions 211b and insertion grooves 211c may be formed by pressing a portion of the body 211a toward the pin 30P.

A guide protrusion 11t may protrude from an inner surface of the slot 11b of the first side core 11 toward the insertion groove 211c, and may be inserted into the insertion groove 211c. The guide protrusions 11t may have a shape corresponding to the insertion grooves 211c, and a distal end of the guide protrusion 11t may be rounded.

Accordingly, the guide protrusion 11t and the insertion groove 211c may guide coupling of the slot 11b and the sleeve 211.

An insertion protrusion 211d may protrude from one side of the body 211a facing the slit 11c, i.e., from the second short side SS2. The insertion protrusion 211d may be inserted into the slit 11c to block the slit 11c. Here, the width w12 of the slit 11c may be smaller than a width w3 of the pin 30P. Accordingly, the sleeve 211 of the first holder 21 may cover the slit 11c of the first side core 11.

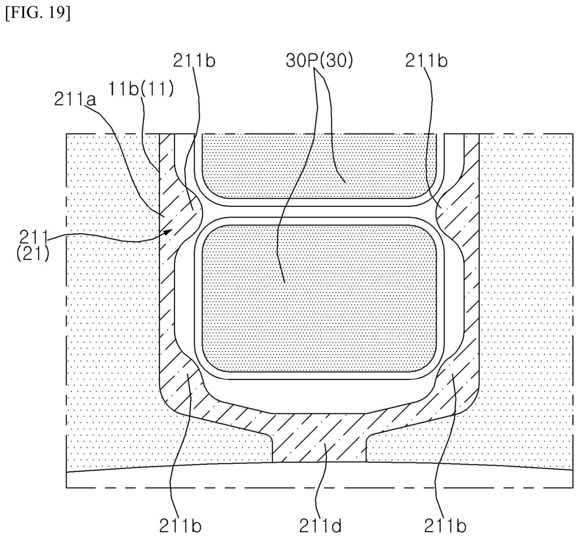

Referring to FIG. 19, an outer surface of the body 211a of the sleeve 211 may be flat without a groove, and an inner surface of the slot 11b of the first side core 11 may also be flat without a protrusion and may be parallel to the outer surface of the body 211a. That is, the insertion groove 211c and the guide protrusion 11t described above with reference to FIG. 18 may be omitted.

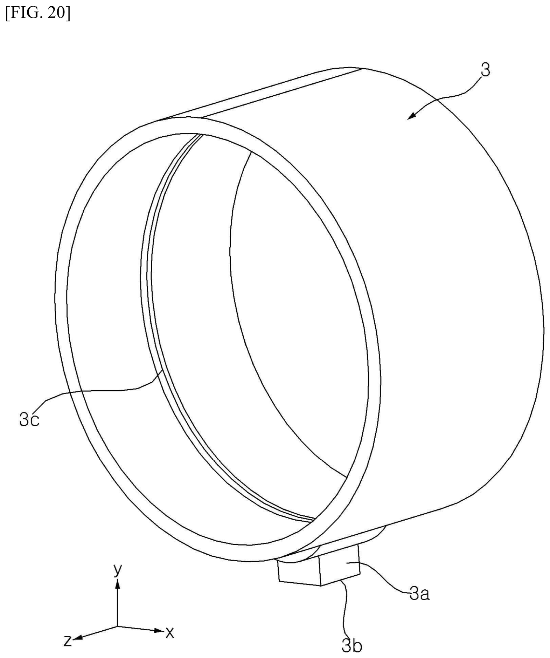

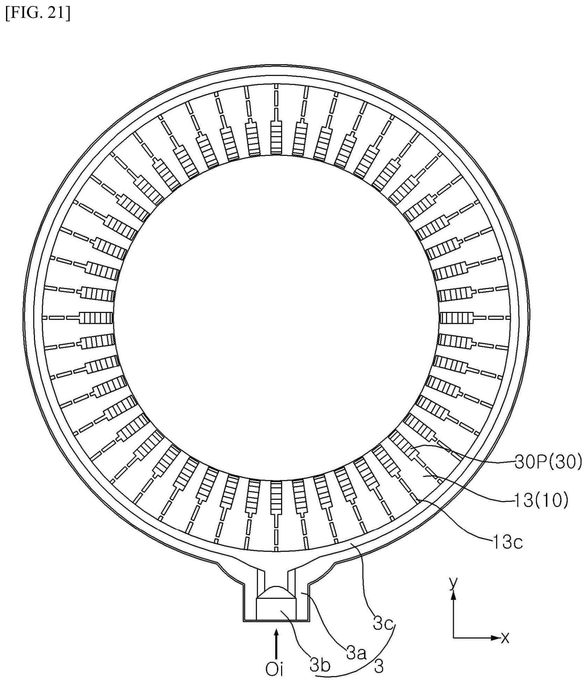

FIGS. 20 and 21 together with FIG. 1, the housing 3 may have a hollow cylindrical shape. The housing 3 may surround an outer circumferential surface of the core 10 of the stator 1. The diameter of the middle core 13 may be equal to the diameters of the first and second side cores 11 and 12 (see FIGS. 12 and 13). An annular channel 3c may be recessed from an inner circumferential surface of the housing 3 and may extend in a circumferential direction of the housing 3. A portion of the inner circumferential surface of the housing 3 that is located outside the channel 3c may contact the first and second side cores 11 and 12. The channel 3c may face the middle core 13 of the core 10, and the holes 13c of the middle core 13 may be formed along the channel 3c. A port 3a may be formed in the housing 3, and an oil inlet 3b connected to the channel 3c may be formed in the port 3a.

Accordingly, oil introduced through the oil inlet 3b may be supplied to the holes 13c of the middle core 13 through the channel 3c.

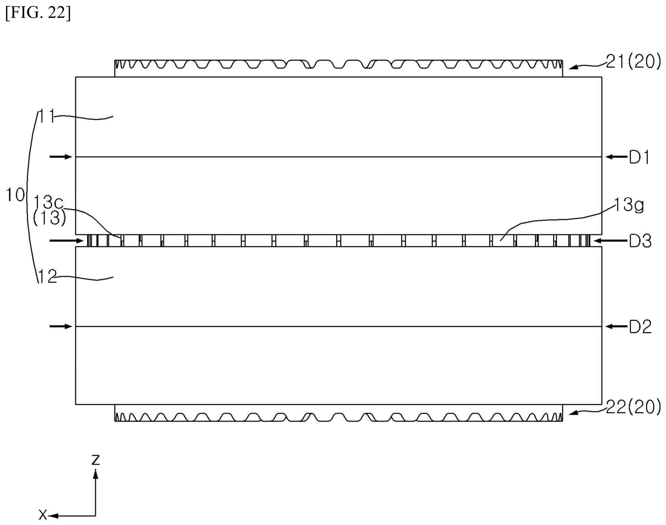

Referring to FIG. 22 together with FIG. 1, a diameter D3 of the middle core 13 may be smaller than diameters D1 and D2 of the first and second side cores 11 and 12. The middle core 13 may be stepped downward from the first and second side cores 11 and 12. The middle core 13 may form the bottom of the annular channel 13g formed in the outer circumferential surface of the core 10 of the stator 1, and the first and second side cores 11 and 12 may form side walls of the channel 13g. The holes 13c of the middle core 13 may be formed along the channel 13g.

The housing 3 may have a hollow cylindrical shape. The housing 3 may surround the outer circumferential surface of the core 10 of the stator 1.

For example, the annular channel corresponding to the middle core 13 may not be formed in the inner circumferential surface of the housing 3. In this case, the inner circumferential surface of the housing 3 may contact the first and second side cores 11 and 12, and the channel 13g may be formed between the middle core 13 and the inner circumferential surface of the housing 3.

In another example, the annular channel 3c (see FIG. 20) corresponding to the middle core 13 may be formed in the inner circumferential surface of the housing 3. In this case, a portion of the inner circumferential surface of the housing 3 that is located outside the channel 3c may contact the first and second side cores 11 and 12, and the channels 13g and 3c may be disposed in parallel.

The port 3a may be formed in the housing 3, and the oil inlet 3b connected to the channel 13g or the channels 13g and 3c may be formed in the port 3a.

Accordingly, oil introduced through the oil inlet 3b may be supplied to the holes 13c of the middle core 13 through the channel 13g or the channels 13g and 3c.

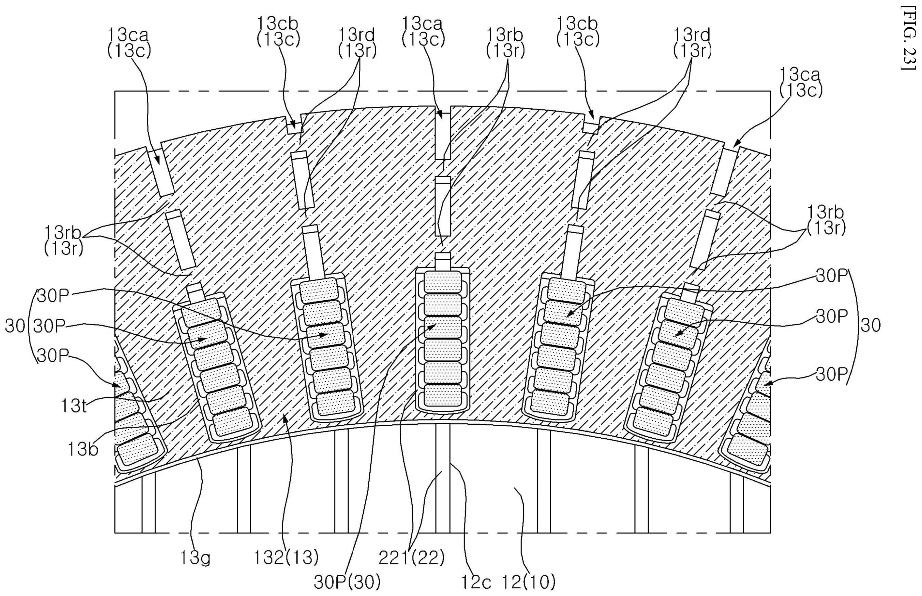

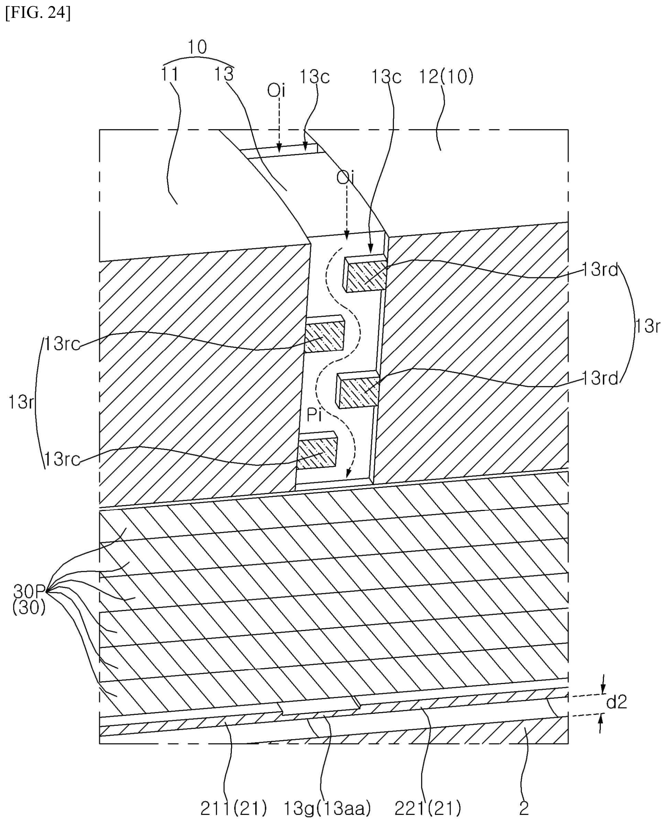

Referring to FIGS. 23 and 24, the hole 13c of the middle core 13 may be formed through both sides of the middle core 13. In the axial direction of the core 10, the first and second side cores 11 and 12 may block the hole 13c of the middle core 13.

The coils 30 may pass through the sleeve 211 inserted into the slot 11b of the core 11, the slot 13b of the middle core 13, and the sleeve 221 inserted into the slot 12b of the second side core 12.

The oil introduced into the hole 13c of the middle core 13 may pass through the ribs 13r formed on the inner surface of the hole 13c. In this case, the ribs 13r are arranged in a zigzag, such that a path Pi of the oil Oi passing through the hole 13c may also be formed in a zigzag shape. Accordingly, the path Pi of the oil Oi passing through the hole 13c becomes longer, thereby increasing an area of contact between the oil Oi and the middle core 13. In addition, cooling efficiency of a portion corresponding to the central portion of the coil 30 may be improved by the oil Oi.

The oil Oi having passed through the hole 13c may be supplied to the slot 13b of the middle core 13 on which the coil 30 is located. In this case, the gum 13g of the middle core 13 that forms the inner circumferential surface 13aa of the middle core 13 may form a portion of the path of the oil Oi in the slot 13b. The oil Oi may be distributed to the sleeve 211 inserted into the first side core 11 and the sleeve 221 inserted into the second side core 12. In this case, the sleeve 211 may form a portion of the path of the oil Oi in the sleeve 211 by covering the slit 11c of the first side core 11. In addition, the sleeve 221 may form a portion of the path of the oil Oi in the sleeve 221 by covering the slit 12c of the second side core 12. Accordingly, the oil Oi introduced into the middle core 13 may flow along the internal spaces 211S and 221S of the sleeves 211 and 221 and may cool the core 10.

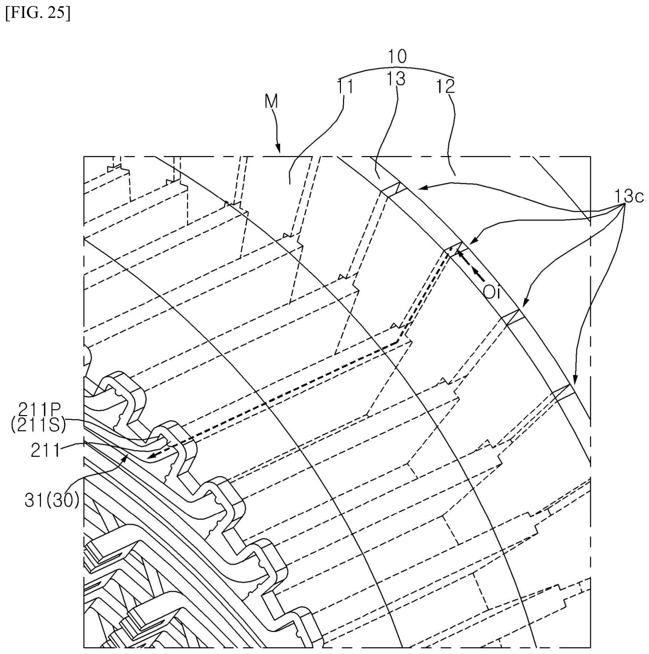

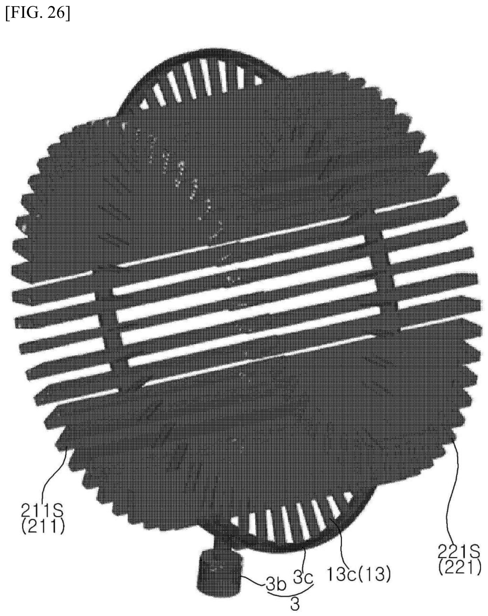

Referring to FIGS. 25 and 26, oil Oi introduced through the oil inlet 3b may be distributed from the channel 3c of the housing 3 to the holes 13c of the middle core 13, and may cool the central portion of the core 10 and the central portion of the coil 30 that corresponds to the central portion of the core 10. Subsequently, the oil Oi having passed through the holes 13c may pass through the internal spaces 211S and 221S of the sleeves 211 and 221 to be discharged outside the sleeves 211 and 221. The discharged oil Oi may also flow to a portion of the coil 30 outside the sleeves 211 and 221. That is, the oil Oi may directly cool the coil 30 from the center to both ends thereof (i.e., first and second end-turn portions 31 and 32, see FIG. 14). Accordingly, the coil 30 of the stator 1 may be smoothly cooled, and the performance of the electric motor M may be improved. Further, a compact structure for cooling the coil 30 of the stator 1 may be provided, which is effective in reducing the volume of the electric motor M, as well as in reducing the manufacturing cost of the electric motor M.

The discharged oil Oi may be collected and provided back to the oil inlet 3b. The electric motor M or a device including the same may include a means for circulating the oil Oi (e.g., pump). The electric motor M or a device including the same may include a means for cooling the discharge oil Oi (e.g., air cooling device and/or water cooling device).

Referring to FIGS. 1 to 26, an electric motor M may include: a housing 3; a stator 1 positioned inside the housing 3; and a rotor 2 positioned inside the stator 1, wherein the stator 1 includes: a core 10 having a hollow cylindrical shape, the core including a slot 10S formed by penetrating both ends of the core 10 in an axial direction of the core 10; a coil 30 wound around the slot 10S and through which a current flows; and a sleeve 211 extending along the slot 10S and covering a lateral surface of the coil, the sleeve 211 forming a path 211P between the sleeve 211 and the coil 30, wherein the core 10 may include a hole 13c communicating with the path 211P of the sleeve 211, and formed from an outer circumferential surface of the core 10 toward the slot 10S, and the housing 3 may include an oil inlet 3b formed at the housing 3.

The oil inlet 3b may provide oil to the holes 13c of the core 10.

The slot 10S of the core 10 may include a plurality of slots 10S spaced apart from each other in a circumferential direction of the core 10, wherein the sleeve 211 may include a plurality of sleeves 211 positioned in the plurality of slots 10S, and the coil 30 may include a plurality of coils 30 wound around the plurality of sleeves 211.

The hole 13c of the core 10 may include a plurality of holes 13c spaced apart from each other in the circumferential direction of the core 10, wherein each of the plurality of holes 13c may be connected to each of the plurality of slots 10S.

The electric motor M may further include an annular channel 3c; 13g formed between the outer circumferential surface of the core 10 and an inner circumferential surface of the housing 3, wherein the channel 3c; 13g may connect the oil inlet 3b of the housing 3 and the plurality of holes 13c of the core 10.

The core 10 may include: a first side core 11 forming one end of the core 10; a second side core 12 forming the other end of the core 10; and a middle core 13 positioned between the first side core 11 and the second side core 12, wherein the hole 13c of the core 10 may be formed at the middle core 13.

The slot 10S of the core 10 may include: a first slot 11b formed at the first side core 11; a second slot 12b formed at the second side core 12; and a third slot 13b formed at the middle core 13, wherein the sleeve may include: a first sleeve 211 positioned in the first slot 11b; and a second sleeve 221 positioned in the second slot 12b and opposite the first sleeve 211 with respect to the third slot 13b, wherein the hole 13c of the core 10 may be connected to the third slot 13b.

The sleeve 211 may include a non-conductive material.

The sleeve 211 may include a plastic material, and may be coupled to the core 10 by insert injection molding.

The slot 10S of the core 10 may be formed from an inner circumferential surface of the core 10 in one direction intersecting the inner circumferential surface of the core 10, wherein the coil 30 may include a plurality of coils 30 sequentially arranged in the one direction, wherein the sleeve 211 may include: a body 211a covering the plurality of coils 30; and protrusions 211b protruding from the body 211a toward the plurality of coils 30, wherein the path 211P of the sleeve 211 may be formed between the protrusions 211b of the sleeve 211.

Each of the plurality of coils 30 may have a rectangular cross-section, and the protrusions 211b of the sleeve 211 may contact four corners of each of the plurality of coils 30.

A distal end of the protrusion 211b of the sleeve 211 may be rounded.

The body 211a of the sleeve 211 may include an outer surface at which an insertion groove 211c is formed, or an outer surface that is flat, wherein the slot 10S of the core 10 may include an inner surface from which a guide protrusion 11t inserted into the insertion groove 211c protrudes, or an inner surface that is parallel to the flat outer surface of the body 211a.

The electric motor M may further include a holder 20 including the sleeve 211, wherein the sleeve 211 may include a plurality of sleeves 211 spaced apart from each other in a circumferential direction of the core 10, wherein the holder 20 may include: a first ring 210 positioned on one end of the core 10, and connecting the plurality of sleeves 211; and a plurality of first protruding portions 212 protruding in a direction opposite the plurality of sleeves 211, and staggered with the plurality of sleeves 211, wherein the coil 30 may include: a first portion 30Pa positioned inside the sleeve 211; and a second portion positioned outside the sleeve 211, bent from one end of the first portion 30Pa of the coil 30, and positioned on the first protruding portion 212.

The holder 20 may include: a second ring 220 opposite the first ring 210 with respect to the core 10; and

second protruding portions 222 protruding in a direction opposite the plurality of first protruding portions 211, and staggered with the plurality of sleeves 211, wherein the coil 30 may include a third portion 30Pb positioned outside the sleeve 211, bent from another end of the first portion 30P of the coil 30, and positioned on the second protruding portion 222.

The plurality of first protruding portions 212 may have a corrugated shape on the first ring 210, and the coil 30 may be one of the plurality of coils 30 wound around the plurality of sleeves 211.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

The foregoing embodiments are merely examples and are not to be considered as limiting the present disclosure. The scope of the present disclosure should be determined by rational interpretation of the appended claims, and all modifications within the equivalents of the disclosure are intended to be included within the scope of the present disclosure.

## Claims

1. An electric motor comprising:
a housing;
a stator positioned inside the housing; and
a rotor positioned inside the stator,
wherein the stator comprises:
a core having a hollow cylindrical shape, the core including a slot formed by penetrating both ends of the core in an axial direction of the core;
a coil wound around the slot and through which a current flows; and
a sleeve extending along the slot and covering a lateral surface of the coil,
the sleeve forming a path between the sleeve and the coil,
wherein the core comprises a hole formed from an outer circumferential surface of the core toward the slot, and communicating with the path of the sleeve,
wherein the housing comprises an oil inlet formed at the housing.

2. The electric motor of claim 1, wherein the slot of the core comprises a
plurality of slots spaced apart from each other in a circumferential direction of the core,
wherein the sleeve comprises a plurality of sleeves positioned in the plurality of slots,
wherein the coil comprises a plurality of coils wound around the plurality of sleeves.

3. The electric motor of claim 2, wherein the hole of the core comprises a
plurality of holes spaced apart from each other in the circumferential direction of the core,
wherein each of the plurality of holes is connected to each of the plurality of slots.

4. The electric motor of claim 3, further comprising an annular channel formed
between the outer circumferential surface of the core and an inner circumferential surface of the housing,
wherein the channel connects the oil inlet of the housing and the plurality of holes of the core.

5. The electric motor of claim 1, wherein the core comprises:
a first side core forming one end of the core;
a second side core forming the other end of the core; and
a middle core positioned between the first side core and the second side core,
wherein the hole of the core is formed at the middle core.

6. The electric motor of claim 5, wherein the slot of the core comprises:
a first slot formed at the first side core;
a second slot formed at the second side core; and
a third slot formed at the middle core,
wherein the sleeve comprises:
a first sleeve positioned in the first slot; and
a second sleeve positioned in the second slot and opposite the first sleeve with respect to the third slot,
wherein the hole of the core is connected to the third slot.

7. The electric motor of claim 1, wherein the sleeve comprises a non-conductive material.

8. The electric motor of claim 7, wherein the sleeve comprises a plastic material, and is coupled to the core by insert injection molding.

9. The electric motor of claim 1, wherein the slot of the core is formed from an
inner circumferential surface of the core in one direction intersecting the inner circumferential surface of the core,
wherein the coil comprises a plurality of coils sequentially arranged in the one direction,
wherein the sleeve comprises:
a body covering the plurality of coils; and
protrusions protruding from the body toward the plurality of coils,
wherein the path of the sleeve is formed between the protrusions of the sleeve.

10. The electric motor of claim 9, wherein each of the plurality of coils has a
rectangular cross-section,
wherein the protrusions of the sleeve contact four corners of each of the plurality of coils.

11. The electric motor of claim 10, wherein a distal end of the protrusion of the sleeve is rounded.

12. The electric motor of claim 11, wherein the body of the sleeve comprises:
an outer surface at which an insertion groove is formed; or
an outer surface that is flat,
wherein the slot of the core comprises:
an inner surface from which a guide protrusion inserted into the insertion groove protrudes; or
an inner surface that is parallel to the flat outer surface of the body.

13. The electric motor of claim 1, further comprising a holder including the sleeve,
wherein the sleeve comprises a plurality of sleeves spaced apart from each other in a circumferential direction of the core,
wherein the holder comprises:
a first ring positioned on one end of the core and connecting the plurality of sleeves; and
a plurality of first protruding portions protruding in a direction opposite the plurality of sleeves, and staggered with the plurality of sleeves,
wherein the coil comprises:
a first portion positioned inside the sleeve; and
a second portion positioned outside the sleeve, bent from one end of the first portion of the coil, and positioned on the first protruding portion.

14. The electric motor of claim 13, wherein the holder comprises:
a second ring opposite the first ring with respect to the core; and
second protruding portions protruding in a direction opposite the plurality of first protruding portions, and staggered with the plurality of sleeves,
wherein the coil comprises a third portion positioned outside the sleeve, bent from another end of the first portion of the coil, and positioned on the second protruding portion.

15. The electric motor of claim 13, wherein the plurality of first protruding portions have a corrugated shape on the first ring,
wherein the coil is one of the plurality of coils wound around the plurality of sleeves.
